# DEMANDE DE BREVET EUROPEEN

(11) **EP 1 383 041 A1**
(43) Date de publication de la demande: **21.01.2004**
(21) Numéro de dépôt: 03300064.7
(22) Date de dépôt: 17.07.2003
(51) Int. Cl.: G06F 9/302, G06F 9/30

(54) **Traitement des interruptions pendant l' Execution d' instructions iteratifs**

(30) Priorité: 17.07.2002 FR 0209072
(71) Demandeur: ST MICROELECTRONICS S.A., 92120 Montrouge (FR)
(72) Inventeur: Liardet, Pierre-Yvan M., 13790, Peynier (FR); Orlando, William M., 13790, Peynier (FR)
(74) Mandataire: de Beaumont, Michel

(57) **Abrégé**

L'invention concerne un circuit de calcul d'une fonction discriminante à itérations successives et à registre de travail sur des données découpées par blocs, comportant : un unique opérateur (2) en logique câblée d'exécution de la fonction ; une pluralité de registres de travail (3) partageant ledit opérateur ; et un élément (4) de sélection d'un des registres de travail pour être associé à l'opérateur.

## Description

La présente invention concerne, de façon générale, le traitement de mots binaires par des fonctions de calcul. L'invention concerne plus particulièrement l'exécution, par une machine d'états en logique câblée d'un circuit intégré, d'un calcul représentant une fonction susceptible d'être utilisée par plusieurs applications au sein de ce même circuit.

Un exemple d'application de la présente invention concerne l'implémentation, au sein d'un même circuit, de plusieurs traitements ayant tous recours à une même fonction opératoire. Par exemple, il peut s'agir d'un traitement de signature à clé publique, d'un contrôle d'intégrité des données ou d'un générateur aléatoire pour la cryptographie. Dans tous les cas ci-dessus, on a généralement recours à une fonction discriminante dite "fonction de hash", par exemple, des fonctions connues sous les dénominations SHA, MD5, etc.

La plupart de ces fonctions discriminantes sont basées sur un traitement itératif d'un message découpé en blocs tenant compte du résultat de l'itération précédente. Elles utilisent donc généralement un unique registre de travail qui est mis à jour à chaque itération de l'opération et constitue, en fin de fonction, un registre de sortie fournissant le résultat souhaité (signature calculée, code d'authentification en contrôle d'intégrité, ou train de bits aléatoire) à exploiter par le reste du circuit.

Il serait souhaitable, dans un souci de miniaturisation, de pouvoir partager un même opérateur logique pour plusieurs traitements exploitant une même fonction.

Toutefois, cela pose plusieurs problèmes en raison de la nature même des fonctions auxquelles s'applique l'invention.

Un premier problème est lié à l'existence d'un registre de travail stockant les résultats des différentes itérations. En effet, cela signifie en pratique que le résultat de la fonction n'est obtenu qu'à l'issue des multiples itérations.

Une solution consisterait à faire attendre des interruptions générées par d'autres applications jusqu'à ce que le calcul des itérations soit terminé. Cela est toutefois incompatible avec un souhait d'exécution en temps réel requis par certaines applications ayant besoin de l'opérateur. Par exemple, dans le cadre d'un contrôle d'intégrité ayant besoin de l'opérateur de discrimination pour un calcul de message d'authentification, on ne peut pas attendre que l'opérateur soit libéré par une autre application.

On aurait également pu penser mémoriser un état intermédiaire d'une application interruptible pour laisser disponible le registre de travail et l'opérateur pour une autre application prioritaire. Toutefois, une mémorisation puis restauration des états du registre de travail associé à l'opérateur nuit aux performances du système et le fragilise pour ce qui concerne la sécurité contre d'éventuels piratages des quantités manipulées.

En pratique, la seule solution classique acceptable lorsque plusieurs applications (signature, intégrité, génération d'aléas) doivent recourir à une fonction de discrimination de type fonction de hash, est de prévoir autant de circuits (opérateur + registre) qu'il y a d'applications.

La présente invention vise à proposer une solution au problème de partage d'un opérateur logique par plusieurs applications exploitant une même fonction de discrimination itérative.

L'invention vise également à proposer une solution compatible avec la miniaturisation souhaitée des circuits intégrés.

L'invention vise également à permettre un partage de l'opérateur en logique câblée sans nuire au besoin de traitement en temps réel d'une application prioritaire.

Pour atteindre ces objets et d'autres, la présente invention prévoit un circuit de calcul d'une fonction discriminante à itérations successives et à registre de travail sur des données découpées par blocs, comportant :
un unique opérateur en logique câblée d'exécution de la fonction ;
une pluralité de registres de travail partageant ledit opérateur ; et
un élément de sélection d'un des registres de travail pour être associé à l'opérateur.

Selon un mode de réalisation de la présente invention, chaque registre stocke un état courant de l'opérateur et le rang de l'itération correspondante.

Selon un mode de réalisation de la présente invention, ladite fonction est une fonction de hash.

Selon un mode de réalisation de la présente invention, un multiplexeur constituant l'élément de sélection est commandé par un décodeur de priorité associé à un processeur intégré contenant ledit circuit de calcul.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un mode de réalisation d'un circuit de calcul d'une fonction de discrimination selon la présente invention ; et
la figure 2 est un organigramme d'une fonction exploitée par le circuit de calcul de la figure 1 selon un mode de réalisation de l'invention.

Pour des raisons de clarté, seuls les étapes et les éléments qui sont nécessaires à la compréhension de l'invention ont été représentés aux figures et seront décrits par la suite. En particulier, l'exploitation faite des calculs par la fonction de discrimination n'a pas été détaillée et ne fait pas l'objet de l'invention, celle-ci s'appliquant quelle que soit l'application requérant l'utilisation de l'opérateur câblé. De plus, les autres constituants d'un circuit intégré contenant le circuit de calcul de l'invention sont classiques et n'ont pas été décrits.

Une caractéristique de la présente invention est de dissocier, dans un circuit de calcul mettant en oeuvre une fonction discriminante itérative à registre de travail, l'opérateur proprement dit du registre de travail. Selon l'invention, on prévoit de partager l'opérateur entre plusieurs registres de travail dédiés individuellement à différentes applications.

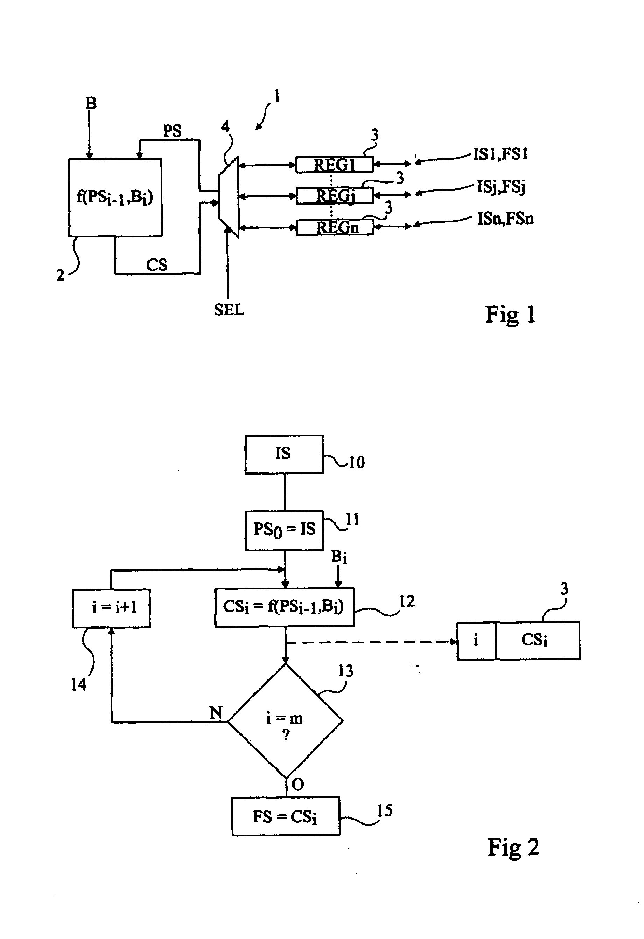

La figure 1 représente, de façon très schématique et sous forme de blocs, un mode de réalisation d'un circuit de calcul partagé selon l'invention.

Le circuit 1 comporte essentiellement un opérateur logique 2 (f((PSᵢ₋₁, Bᵢ)) exécutant une opération utilisant comme opérandes un bloc B binaire et un état PS représentant le résultat de l'opération à une itération précédente.

La donnée traitée (dans l'exemple de la figure 1, bloc B) constitue une partie d'un mot de données pour lequel une application requiert l'utilisation de la fonction discriminante.

L'état précédent PSᵢ₋₁ combiné par la machine d'états logique 2 au bloc courant Bᵢ est initialisé en début d'itération par une valeur initiale IS, et correspond après la dernière itération de la fonction discriminante au résultat final FS requit par l'application.

Jusque là, ce qui a été décrit correspond à un opérateur câblé d'une fonction discriminante classique. Par exemple, il pourra s'agir d'une fonction dite de hash.

Selon l'invention, les états d'entrée (PS) et de sortie (CS) de l'opérateur 2 correspondent aux contenus successifs d'un unique registre de travail par application. Toutefois, on prévoit autant de registres de travail 3 (REG1, ..., REGj, ..., REGn) que d'applications devant partager le circuit 1.

Chaque registre 3 est équivalent à un registre de travail classique associé à un opérateur câblé 2. Toutefois, selon l'invention, des entrées/sorties des registres 3 sont reliées aux entrées multiples d'un multiplexeur 4 dont une unique entrée/sortie est reliée en entrée (signal PS) de l'opérateur 2 et en sortie (signal CS) de cet opérateur 2. Le multiplexeur 4 reçoit un signal de sélection (SEL) provenant, par exemple, d'un contrôleur de priorité (non représenté) associé à l'unité centrale de traitement du processeur intégrant le circuit 1.

Les états initiaux IS₁, ..., ISⱼ, ..., ISₙ sont chargés sous contrôle de l'unité centrale dans chaque registre 3. Les états finaux FS₁, ..., FS_{j, ...} FSₙ de la fonction f après les itérations requises sont lus individuellement dans chaque registre, par les circuits du processeur ayant requis l'application de la fonction de hash à un mot binaire donné.

De façon classique, le nombre m d'itérations dépend du nombre de blocs de données à traiter. Selon l'invention, le nombre n de registres dépend du nombre d'applications qui requièrent l'opérateur 2.

La figure 2 est un organigramme simplifié de la fonction remplie par l'opérateur 2.

On part (bloc 10, IS) d'un état initial. Cet état est, dans l'exemple de la figure 1, préalablement chargé dans l'un des registres de travail associé à l'application ayant requis la fonction. Dans un exemple particulier appliqué à une fonction dite SHA, cet état initial est prédéterminé.

L'état initial devient, lorsque le multiplexeur 4 attribue l'opérateur 2 au registre concerné, la première valeur PS₀ d'entrée de l'opérateur (bloc 11, PS₀ = IS).

On exécute alors (bloc 12, CSᵢ = f (PSᵢ₋₁, Bᵢ)), la fonction de l'opérateur logique au premier couple de données, ici le premier bloc de données à traiter B1 et le premier état d'entrée PS₀. Cette opération est répétée pour les m blocs de données à traiter. Par conséquent, cela revient à tester (bloc 13, i=m ?) la fin du mot de données à traiter. Dans la négative, on incrémente (bloc 14, i=i+1) le rang de l'itération et on exécute l'opérateur f une nouvelle fois avec, comme valeurs d'entrée, PSᵢ₋ 1 et un nouveau bloc de données Bᵢ. Dans l'affirmative, le mot de sortie CSᵢ fourni par l'opérateur est considéré comme l'état final FS pour l'application ayant requis la fonction.

Selon l'invention, après chaque exécution (bloc 12) de l'opérateur, on stocke dans le registre concerné l'état courant CSi ainsi que le rang i de l'itération. Cette caractéristique de l'invention permet, en cas d'interruption de la fonction pour rendre disponible l'opérateur 2 à une application plus prioritaire, de conserver le rang courant de la fonction pour ne pas recommencer celle-ci depuis le début.

Bien entendu, pour la mise en oeuvre de l'invention, les mots de données à traiter par la fonction discriminante sont également stockés dans des éléments de mémorisation (par exemple, des registres) adaptés. Le rang i stocké dans le registre 3 affecté à l'application sert à sélectionner le bloc de données approprié lors de la reprise des itérations pour l'application concernée.

Généralement, pour l'application à une fonction de hash, les mots de données sont divisés en blocs Bᵢ de 512 bits chacun.

Un avantage de la présente invention est qu'elle permet de partager un même opérateur en logique câblée pour plusieurs fonctions discriminantes exécutées par des applications différentes d'un processeur intégré.

Un autre avantage de l'invention est qu'en évitant le stockage dans une mémoire externe du circuit intégré des états intermédiaires de calcul, l'invention préserve le caractère sécuritaire requis généralement aux applications de fonctions discriminantes.

Un autre avantage de la présente invention est que sa mise en oeuvre est particulièrement simple dans un processeur intégré. En particulier, la mise en oeuvre de l'invention est compatible avec les circuits matériels et les processus de commande généralement utilisés dans des processeurs intégrés. De plus, l'application traitée par l'opérateur 2 est transparente pour ce dernier, en ce sens que tout fonctionne comme s'il n'était connecté qu'à un registre.

Selon un exemple préféré d'application de la présente invention, l'opérateur 2 est partagé par plusieurs applications parmi lesquelles au moins un contrôle d'intégrité de données en temps réel. Dans ce cas, cette application est considérée comme la plus prioritaire.

Une deuxième application potentielle peut être un calcul de signature ou de code d'authentification ayant un rang de priorité moins élevé.

En troisième rang de priorité, on peut prévoir d'utiliser l'opérateur 2 dans la génération d'un nombre pseudo aléatoire qui possède alors le rang de priorité le plus faible.

Bien entendu, la présente invention est susceptible de diverses variantes et modifications qui apparaîtront à l'homme de l'art. En particulier, la réalisation pratique du circuit de calcul selon l'invention est à la portée de l'homme du métier à partir des indications fonctionnelles données ci-dessus. De plus, les commandes nécessaires au multiplexeur et aux différents registres en utilisant des moyens de commande classiques sont à la portée de l'homme du métier. En outre, bien que cela n'ait pas été détaillé, la sélection du bloc Bᵢ affecté au mot de données de l'application pourra être effectuée de plusieurs façons. Par exemple, l'unité centrale de traitement du circuit intégré gère la lecture des blocs voulus selon les priorités décidées.

## Revendications

1. Circuit de calcul d'une fonction discriminante à itérations successives et à registre de travail sur des données découpées par blocs, **caractérisé en ce qu'**il comporte :
un unique opérateur (2) en logique câblée d'exécution de la fonction ;
une pluralité de registres de travail (3) partageant ledit opérateur, chaque registre (3) stockant un état courant de l'opérateur (2) et le rang (i) de l'itération correspondante ; et
un élément (4) de sélection d'un des registres de travail pour être associé à l'opérateur.

2. Circuit selon la revendication 1, **caractérisé en ce que** ladite fonction est une fonction de hash.

3. Circuit de calcul selon la revendication 1 ou 2, **caractérisé en ce qu'**un multiplexeur (4) constituant l'élément de sélection est commandé par un décodeur de priorité associé à un processeur intégré contenant ledit circuit de calcul.
